# EUROPEAN PATENT APPLICATION

(11) **EP 4 202 886 A1**
(43) Date of publication of application: **28.06.2023**
(21) Application number: 22210349.1
(22) Date of filing: 29.11.2022
(51) Int. Cl.: G08G 1/0969, G08G 1/16, B60W 60/00, G05D 1/02

(54) **USING MAPS AT MULTIPLE RESOLUTIONS AND SCALE FOR TRAJECTORY PREDICTION**

(30) Priority: 22.12.2021 US 202117559594
(71) Applicant: GM Cruise Holdings LLC, San Francisco, CA 94107 (US)
(72) Inventor: Raina, Siddharth, San Francisco (US); Fang, Da, San Francisco (US); Grecu, Mircea, San Francisco (US)
(74) Representative: Perronace, Andrea

(57) **Abstract**

The present technology pertains to predicting trajectories of objects near an autonomous vehicle. The predictions may be obtained as output from a trajectory prediction machine learning model. The inputs to the trajectory prediction machine learning model may be based on a first map of an area surrounding an autonomous vehicle, and a second map of an area around an object within the first area. The second map may have a smaller area and a higher resolution relative to the first map.

## Description

### TECHNICAL FIELD

The subject matter of this disclosure relates in general to the field of autonomous vehicles, and more particularly, to systems and methods for predicting trajectories of objects near autonomous vehicles.

### BACKGROUND

An Autonomous Vehicle (AV) is a motorized vehicle that can navigate without a human driver. The AV can include a plurality of sensor systems, such as a camera system, a Light Detection and Ranging (LIDAR) system, a Radio Detection and Ranging (RADAR) system, and so on. The AV may operate based upon sensor signal output of the sensor systems. For example, the sensor signals can be provided to a local computing system in communication with the plurality of sensor systems, and a processor can execute instructions based upon the sensor signals to control one or more mechanical systems of the AV, such as a vehicle propulsion system, a braking system, a steering system, and so forth.

The AV may depend on geographic and spatial (geospatial) data to localize itself (e.g., obtain its position and orientation (pose)), and other objects within its immediate surroundings, determine routes towards destinations, and coordinate motor controls to maneuver safely and efficiently while in transit, among other operations. The AV geospatial data can include the various dimensions or attributes (e.g., Global Positioning System (GPS) coordinates; polygon vertices; polyline vertices; length, width, height; radial distance, polar angle; etc.) of physical places and things (e.g., streets, lanes, crosswalks, sidewalks, medians, traffic signal poles, traffic signs, etc.). The AV geospatial data can also include abstract or semantic features (e.g., speed limits, carpool lanes, bike lanes, crosswalks, intersections, legal or illegal U-turns, traffic signal lights, etc.) that the AV can evaluate to determine the next set of actions it may take for a given situation. For example, an intersection tagged as a permissive left-turn may indicate that it is legal for the AV to turn left on a solid green traffic signal light so long as the AV yields to any oncoming traffic (i.e., other objects). The annotation of locations, objects, and features can require at least some human intervention, such as the manual labeling of certain areas, physical things, or concepts; quality assurance review of computer-generated geospatial observations; computer-aided design of maps; and so on. Semantic maps of the area surrounding an AV may be used as input to prediction models executed, for example, by a prediction stack of an in-vehicle local computing device of an AV.

### BRIEF DESCRIPTION OF THE DRAWINGS

FIG. 1 illustrates an example of a system for managing one or more Autonomous Vehicles (AVs) in accordance with some aspects of the present technology.
FIG. 2 is a flowchart of a method for predicting trajectories of objects near an autonomous vehicle in accordance with some aspects of the present technology.
FIG. 3A shows an example of a lower resolution map of an area surrounding an autonomous vehicle in accordance with some aspects of the present technology.
FIG. 3B shows an example of a higher resolution map of an area surrounding an object near an autonomous vehicle in accordance with some aspects of the present technology.
FIG. 4 shows an example of a computing system for implementing certain aspects of the present technology.

### DETAILED DESCRIPTION

The detailed description set forth below is intended as a description of various configurations of embodiments and is not intended to represent the only configurations in which the subject matter of this disclosure can be practiced. The appended drawings are incorporated herein and constitute a part of the detailed description. The detailed description includes specific details for the purpose of providing a more thorough understanding of the subject matter of this disclosure. However, it will be clear and apparent that the subject matter of this disclosure is not limited to the specific details set forth herein and may be practiced without these details. In some instances, structures and components are shown in block diagram form in order to avoid obscuring the concepts of the subject matter of this disclosure.

The present technology can involve the gathering and use of data available from various sources to improve quality and experience. The present disclosure contemplates that in some instances, this gathered data may include personal information. The present disclosure contemplates that the entities involved with such personal information respect and value privacy policies and practices.

In general, embodiments described herein relate to predicting future trajectories of objects (e.g., other vehicles, pedestrians, etc.) near an AV. In one or more embodiments, to make such predictions, a prediction stack of a local computing device of an AV executes a trained machine learning model (e.g., a convolutional neural network). In one or more embodiments, the inputs to the machine learning model include information from a semantic map of the area surrounding the AV, as well as other information related thereto, such as, for example, kinematic and other information related to objects within the area covered by the semantic map (e.g., past positional information for moving objects, types of objects, etc.), which may, for example, be provided, at least in part, from a perception stack of the AV. In one or more embodiments, the output of the machine learning model is one or more predicted trajectories of one or more objects near the AV, along with associated uncertainty values for the predictions. In one or more embodiments, other components of the AV (e.g., a planning stack) may consume the predicted trajectories of objects near the AV when making decisions related to controlling the AV.

However, making such predictions using a single semantic map may lead to predictions that are less accurate than desired, as the resolution of the map must necessarily be low enough that the compute resources available to the prediction stack of the AV can process the input information, execute the trained machine learning model, and produce predicted trajectories of objects near the AV, all in a low enough amount of time to allow the other components of the AV to use the predicted trajectories to, for example, take actions related to controlling the AV (e.g., brake, increase speed, alter course, etc.). Having a single semantic map of lower resolution may lead to scenarios where not all objects near the AV are separately recognizable, and/or do not have enough detailed information in the area immediately surrounding an object to make trajectory predictions having a desired level of accuracy.

Embodiments described herein may address the above and other deficiencies of using a single map to predict trajectories of objects near an AV. Specifically, in one or more embodiments, multiple maps (e.g., at least two) are used as input to the trained machine learning model of the prediction stack of the AV. In one or more embodiments, the first map is the aforementioned map of the area surrounding the AV. The second map is a map of a smaller area surrounding an object for which a trajectory prediction is to be made. The second map, having a smaller area relative to the first map, may have a higher resolution than the first map. The higher resolution may allow the second map to better distinguish separate objects in the area of the second map, and also include more detail of the area around the object for which a trajectory is to be predicted (e.g., exact road lane boundaries, position relative to other moving and non-moving objects, etc.).

In one or more embodiments, having a higher resolution map of a smaller area surrounding an object, and a lower resolution map of a larger area surrounding an AV, allows for a machine learning model executed by a prediction stack of an AV to make more accurate predictions of the trajectory of the object while staying within the compute resource and time bounds necessary to make the predictions for use by other components of the AV to control the AV.

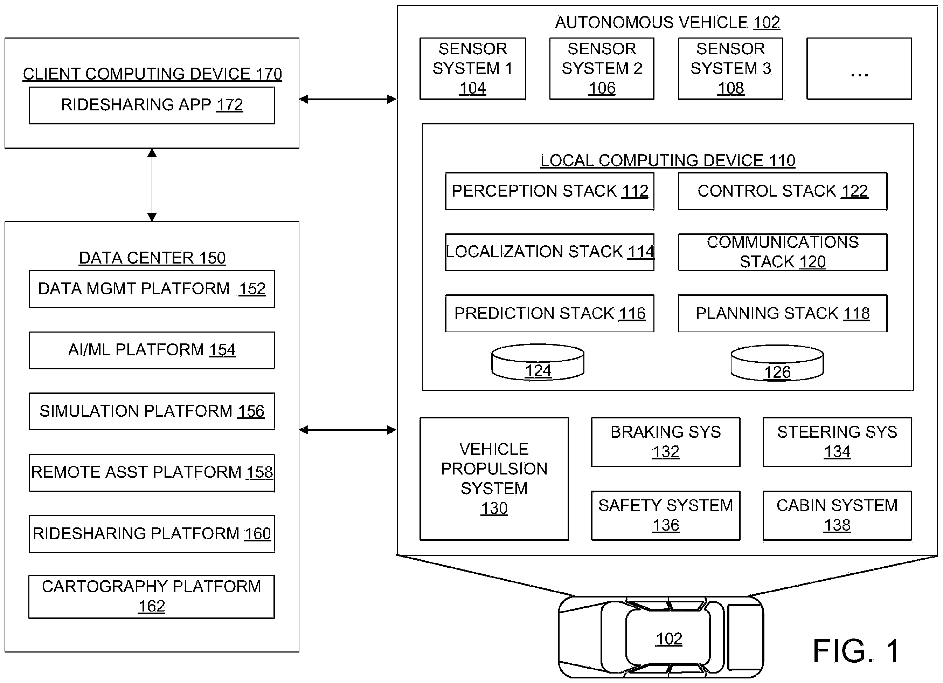

Turning now to the drawings, FIG. 1 illustrates an example of an AV management system. One of ordinary skill in the art will understand that, for the AV management system and any system discussed in the present disclosure, there can be additional or fewer components in similar or alternative configurations. The illustrations and examples provided in the present disclosure are for conciseness and clarity. Other embodiments may include different numbers and/or types of elements, but one of ordinary skill the art will appreciate that such variations do not depart from the scope of the present disclosure.

In this example, the AV management system includes an AV 102, a data center 150, and a client computing device 170. The AV 102, the data center 150, and the client computing device 170 can communicate with one another over one or more networks (not shown), such as a public network (e.g., the Internet, an Infrastructure as a Service (IaaS) network, a Platform as a Service (PaaS) network, a Software as a Service (SaaS) network, other Cloud Service Provider (CSP) network, etc.), a private network (e.g., a Local Area Network (LAN), a private cloud, a Virtual Private Network (VPN), etc.), and/or a hybrid network (e.g., a multi-cloud or hybrid cloud network, etc.).

The AV 102 can navigate roadways without a human driver based on sensor signals generated by multiple sensor systems 104, 106, and 108. The sensor systems 104-108 can include different types of sensors and can be arranged about the AV 102. For instance, the sensor systems 104-108 can comprise Inertial Measurement Units (IMUs), cameras (e.g., still image cameras, video cameras, etc.), light sensors (e.g., light detection and ranging (LIDAR) systems, ambient light sensors, infrared sensors, etc.), RADAR systems, global positioning system (GPS) receivers, audio sensors (e.g., microphones, Sound Navigation and Ranging (SONAR) systems, ultrasonic sensors, etc.), engine sensors, speedometers, tachometers, odometers, altimeters, tilt sensors, impact sensors, airbag sensors, seat occupancy sensors, open/closed door sensors, tire pressure sensors, rain sensors, and so forth. For example, the sensor system 104 can be a camera system, the sensor system 106 can be a LIDAR system, and the sensor system 108 can be a RADAR system. Other embodiments may include any other number and type of sensors.

The AV 102 can also include several mechanical systems that can be used to maneuver or operate the AV 102. For instance, the mechanical systems can include a vehicle propulsion system 130, a braking system 132, a steering system 134, a safety system 136, and a cabin system 138, among other systems. The vehicle propulsion system 130 can include an electric motor, an internal combustion engine, or both. The braking system 132 can include an engine brake, brake pads, actuators, and/or any other suitable componentry configured to assist in decelerating the AV 102. The steering system 134 can include suitable componentry configured to control the direction of movement of the AV 102 during navigation. The safety system 136 can include lights and signal indicators, a parking brake, airbags, and so forth. The cabin system 138 can include cabin temperature control systems, in-cabin entertainment systems, and so forth. In some embodiments, the AV 102 might not include human driver actuators (e.g., steering wheel, handbrake, foot brake pedal, foot accelerator pedal, turn signal lever, window wipers, etc.) for controlling the AV 102. Instead, the cabin system 138 can include one or more client interfaces (e.g., Graphical User Interfaces (GUIs), Voice User Interfaces (VUIs), etc.) for controlling certain aspects of the mechanical systems 130-138.

The AV 102 can additionally include a local computing device 110 that is in communication with the sensor systems 104-108, the mechanical systems 130-138, the data center 150, and the client computing device 170, among other systems. The local computing device 110 can include one or more processors and memory, including instructions that can be executed by the one or more processors. The instructions can make up one or more software stacks or components responsible for controlling the AV 102; communicating with the data center 150, the client computing device 170, and other systems; receiving inputs from riders, passengers, and other entities within the AV's environment; logging metrics collected by the sensor systems 104-108; and so forth. In this example, the local computing device 110 includes a perception stack 112, a mapping and localization stack 114, a prediction stack 116, a planning stack 118, a communication stack 120, a control stack 122, an AV operational database 124, and an HD geospatial database 126, among other stacks and systems.

The perception stack 112 can enable the AV 102 to "see" (e.g., via cameras, LIDAR sensors, infrared sensors, etc.), "hear" (e.g., via microphones, ultrasonic sensors, RADAR, etc.), and "feel" (e.g., pressure sensors, force sensors, impact sensors, etc.) its environment using information from the sensor systems 104-108, the mapping and localization stack 114, the HD geospatial database 126, other components of the AV, and other data sources (e.g., the data center 150, the client computing device 170, third party data sources, etc.). The perception stack 112 can detect and classify objects and determine their current locations, speeds, directions, and the like. In addition, the perception stack 112 can determine the free space around the AV 102 (e.g., to maintain a safe distance from other objects, change lanes, park the AV, etc.). The perception stack 112 can also identify environmental uncertainties, such as where to look for moving objects, flag areas that may be obscured or blocked from view, and so forth. In some embodiments, an output of the prediction stack can be a bounding area around a perceived object that can be associated with a semantic label that identifies the type of object that is within the bounding area, the kinematic of the object (information about its movement), a tracked path of the object, and a description of the pose of the object (its orientation or heading, etc.).

The mapping and localization stack 114 can determine the AV's position and orientation (pose) using different methods from multiple systems (e.g., GPS, IMUs, cameras, LIDAR, RADAR, ultrasonic sensors, the HD geospatial database 126, etc.). For example, in some embodiments, the AV 102 can compare sensor data captured in real-time by the sensor systems 104-108 to data in the HD geospatial database 126 to determine its precise (e.g., accurate to the order of a few centimeters or less) position and orientation. The AV 102 can focus its search based on sensor data from one or more first sensor systems (e.g., GPS) by matching sensor data from one or more second sensor systems (e.g., LIDAR). If the mapping and localization information from one system is unavailable, the AV 102 can use mapping and localization information from a redundant system and/or from remote data sources.

The prediction stack 116 can receive information from the localization stack 114 and objects identified by the perception stack 112 and predict a future path for the objects. In some embodiments, the prediction stack 116 can output several likely paths that an object is predicted to take along with an uncertainty value associated with each path. For each predicted path, the prediction stack 116 can also output a range of points along the path corresponding to a predicted location of the object along the path at future time intervals along with an expected error value for each of the points that indicates a probabilistic deviation from that point. In one or more embodiments, predictions of trajectories of objects near an AV are made using a trained machine learning model (e.g., a convolutional neural network) executed by the prediction stack 116. In one or more embodiments, in order to make such a prediction for a given object, the prediction stack 116 obtains a first map of the area surrounding the AV, and a second map of the area immediately around the object for which a trajectory prediction is to be made, with the second map covering a smaller area at a higher resolution relative to the first map.

The planning stack 118 can determine how to maneuver or operate the AV 102 safely and efficiently in its environment. For example, the planning stack 118 can receive the location, speed, and direction of the AV 102, geospatial data, data regarding objects sharing the road with the AV 102 (e.g., pedestrians, bicycles, vehicles, ambulances, buses, cable cars, trains, traffic lights, lanes, road markings, etc.) or certain events occurring during a trip (e.g., emergency vehicle blaring a siren, intersections, occluded areas, street closures for construction or street repairs, double-parked cars, etc.), traffic rules and other safety standards or practices for the road, user input, and other relevant data for directing the AV 102 from one point to another and outputs from the perception stack 112, localization stack 114, and prediction stack 116. The planning stack 118 can determine multiple sets of one or more mechanical operations that the AV 102 can perform (e.g., go straight at a specified rate of acceleration, including maintaining the same speed or decelerating; turn on the left blinker, decelerate if the AV is above a threshold range for turning, and turn left; turn on the right blinker, accelerate if the AV is stopped or below the threshold range for turning, and turn right; decelerate until completely stopped and reverse; etc.), and select the best one to meet changing road conditions and events. If something unexpected happens, the planning stack 118 can select from multiple backup plans to carry out. For example, while preparing to change lanes to turn right at an intersection, another vehicle may aggressively cut into the destination lane, making the lane change unsafe. The planning stack 118 could have already determined an alternative plan for such an event. Upon its occurrence, it could help direct the AV 102 to go around the block instead of blocking a current lane while waiting for an opening to change lanes.

The control stack 122 can manage the operation of the vehicle propulsion system 130, the braking system 132, the steering system 134, the safety system 136, and the cabin system 138. The control stack 122 can receive sensor signals from the sensor systems 104-108 as well as communicate with other stacks or components of the local computing device 110 or a remote system (e.g., the data center 150) to effectuate operation of the AV 102. For example, the control stack 122 can implement the final path or actions from the multiple paths or actions provided by the planning stack 118. This can involve turning the routes and decisions from the planning stack 118 into commands for the actuators that control the AV's steering, throttle, brake, and drive unit.

The communication stack 120 can transmit and receive signals between the various stacks and other components of the AV 102 and between the AV 102, the data center 150, the client computing device 170, and other remote systems. The communication stack 120 can enable the local computing device 110 to exchange information remotely over a network, such as through an antenna array or interface that can provide a metropolitan WIFI network connection, a mobile or cellular network connection (e.g., Third Generation (3G), Fourth Generation (4G), Long-Term Evolution (LTE), 5th Generation (5G), etc.), and/or other wireless network connection (e.g., License Assisted Access (LAA), Citizens Broadband Radio Service (CBRS), MULTEFIRE, etc.). The communication stack 120 can also facilitate the local exchange of information, such as through a wired connection (e.g., a user's mobile computing device docked in an in-car docking station or connected via Universal Serial Bus (USB), etc.) or a local wireless connection (e.g., Wireless Local Area Network (WLAN), Bluetooth^{®}, infrared, etc.).

The HD geospatial database 126 can store HD maps and related data of the streets upon which the AV 102 travels. In some embodiments, the HD maps and related data can comprise multiple layers, such as an areas layer, a lanes and boundaries layer, an intersections layer, a traffic controls layer, and so forth. The areas layer can include geospatial information indicating geographic areas that are drivable (e.g., roads, parking areas, shoulders, etc.) or not drivable (e.g., medians, sidewalks, buildings, etc.), drivable areas that constitute links or connections (e.g., drivable areas that form the same road) versus intersections (e.g., drivable areas where two or more roads intersect), and so on. The lanes and boundaries layer can include geospatial information of road lanes (e.g., lane centerline, lane boundaries, type of lane boundaries, etc.) and related attributes (e.g., direction of travel, speed limit, lane type, etc.). The lanes and boundaries layer can also include 3D attributes related to lanes (e.g., slope, elevation, curvature, etc.). The intersections layer can include geospatial information of intersections (e.g., crosswalks, stop lines, turning lane centerlines and/or boundaries, etc.) and related attributes (e.g., permissive, protected/permissive, or protected only left turn lanes; legal or illegal u-turn lanes; permissive or protected only right turn lanes; etc.). The traffic controls lane can include geospatial information of traffic signal lights, traffic signs, and other road objects and related attributes. In some embodiments, HD geospatial database can store maps in multiple different resolutions.

The AV operational database 124 can store raw AV data generated by the sensor systems 104-108, stacks 112 - 122, and other components of the AV 102 and/or data received by the AV 102 from remote systems (e.g., the data center 150, the client computing device 170, etc.). In some embodiments, the raw AV data can include HD LIDAR point cloud data, image data, RADAR data, GPS data, and other sensor data that the data center 150 can use for creating or updating AV geospatial data or for creating simulations of situations encountered by AV 102 for future testing or training of various machine learning algorithms that are incorporated in the local computing device 110.

The data center 150 can be a private cloud (e.g., an enterprise network, a co-location provider network, etc.), a public cloud (e.g., an IaaS network, a PaaS network, a SaaS network, or other CSP network), a hybrid cloud, a multi-cloud, and so forth. The data center 150 can include one or more computing devices remote to the local computing device 110 for managing a fleet of AVs and AV-related services. For example, in addition to managing the AV 102, the data center 150 may also support a ridesharing service, a delivery service, a remote/roadside assistance service, street services (e.g., street mapping, street patrol, street cleaning, street metering, parking reservation, etc.), and the like.

The data center 150 can send and receive various signals to and from the AV 102 and the client computing device 170. These signals can include sensor data captured by the sensor systems 104-108, roadside assistance requests, software updates, ridesharing pick-up and drop-off instructions, and so forth. In this example, the data center 150 includes a data management platform 152, an Artificial Intelligence/Machine Learning (AI/ML) platform 154, a simulation platform 156, a remote assistance platform 158, a ridesharing platform 160, and a cartography platform 162, among other systems.

The data management platform 152 can be a "big data" system capable of receiving and transmitting data at high velocities (e.g., near real-time or real-time), processing a large variety of data and storing large volumes of data (e.g., terabytes, petabytes, or more of data). The varieties of data can include data having different structured (e.g., structured, semi-structured, unstructured, etc.), data of different types (e.g., sensor data, mechanical system data, ridesharing service, map data, audio, video, etc.), data associated with different types of data stores (e.g., relational databases, key-value stores, document databases, graph databases, column-family databases, data analytic stores, search engine databases, time series databases, object stores, file systems, etc.), data originating from different sources (e.g., AVs, enterprise systems, social networks, etc.), data having different rates of change (e.g., batch, streaming, etc.), or data having other heterogeneous characteristics. The various platforms and systems of the data center 150 can access data stored by the data management platform 152 to provide their respective services.

The AI/ML platform 154 can provide the infrastructure for training and evaluating machine learning algorithms for operating the AV 102, the simulation platform 156, the remote assistance platform 158, the ridesharing platform 160, the cartography platform 162, and other platforms and systems. Using the AI/ML platform 154, data scientists can prepare data sets from the data management platform 152; select, design, and train machine learning models; evaluate, refine, and deploy the models; maintain, monitor, and retrain the models; and so on. As an example, the AI/ML platform 154 may train and evaluate an object trajectory prediction machine learning model to be deployed on the AV and executed by the prediction stack therein to predict trajectories of objects near the AV.

The simulation platform 156 can enable testing and validation of the algorithms, machine learning models, neural networks, and other development efforts for the AV 102, the remote assistance platform 158, the ridesharing platform 160, the cartography platform 162, and other platforms and systems. The simulation platform 156 can replicate a variety of driving environments and/or reproduce real-world scenarios from data captured by the AV 102, including rendering geospatial information and road infrastructure (e.g., streets, lanes, crosswalks, traffic lights, stop signs, etc.) obtained from the cartography platform 162; modeling the behavior of other vehicles, bicycles, pedestrians, and other dynamic elements; simulating inclement weather conditions, different traffic scenarios; and so on.

The remote assistance platform 158 can generate and transmit instructions regarding the operation of the AV 102. For example, in response to an output of the AI/ML platform 154 or other system of the data center 150, the remote assistance platform 158 can prepare instructions for one or more stacks or other components of the AV 102.

The ridesharing platform 160 can interact with a customer of a ridesharing service via a ridesharing application 172 executing on the client computing device 170. The client computing device 170 can be any type of computing system, including a server, desktop computer, laptop, tablet, smartphone, smart wearable device (e.g., smartwatch, smart eyeglasses or other Head-Mounted Display (HMD), smart ear pods, or other smart in-ear, on-ear, or over-ear device, etc.), gaming system, or other general purpose computing device for accessing the ridesharing application 172. The client computing device 170 can be a customer's mobile computing device or a computing device integrated with the AV 102 (e.g., the local computing device 110). The ridesharing platform 160 can receive requests to pick up or drop off from the ridesharing application 172 and dispatch the AV 102 for the trip.

The cartography platform 162 can provide a set of tools for the manipulation and management of geographic and spatial (geospatial) and related attribute data. The data management platform 152 can receive LIDAR point cloud data, image data (e.g., still image, video, etc.), RADAR data, GPS data, and other sensor data (e.g., raw data) from one or more AVs 102, UAVs, satellites, third-party mapping services, and other sources of geospatially referenced data. The raw data can be processed, and the cartography platform 162 can render base representations (e.g., tiles (2D), bounding volumes (3D), etc.) of the AV geospatial data to enable users to view, query, label, edit, and otherwise interact with the data. The cartography platform 162 can manage workflows and tasks for operating on the AV geospatial data. The cartography platform 162 can control access to the AV geospatial data, including granting or limiting access to the AV geospatial data based on user-based, role-based, group-based, task-based, and other attribute-based access control mechanisms. The cartography platform 162 can provide version control for the AV geospatial data, such as to track specific changes that (human or machine) map editors have made to the data and to revert changes when necessary. The cartography platform 162 can administer release management of the AV geospatial data, including distributing suitable iterations of the data to different users, computing devices, AVs, and other consumers of HD maps. The cartography platform 162 can provide analytics regarding the AV geospatial data and related data, such as to generate insights relating to the throughput and quality of mapping tasks.

In some embodiments, the map viewing services of the cartography platform 162 can be modularized and deployed as part of one or more of the platforms and systems of the data center 150. For example, the AI/ML platform 154 may incorporate the map viewing services for visualizing the effectiveness of various object detection or object classification models, the simulation platform 156 may incorporate the map viewing services for recreating and visualizing certain driving scenarios, the remote assistance platform 158 may incorporate the map viewing services for replaying traffic incidents to facilitate and coordinate aid, the ridesharing platform 160 may incorporate the map viewing services into the client application 172 to enable passengers to view the AV 102 in transit en route to a pick-up or drop-off location, and so on.

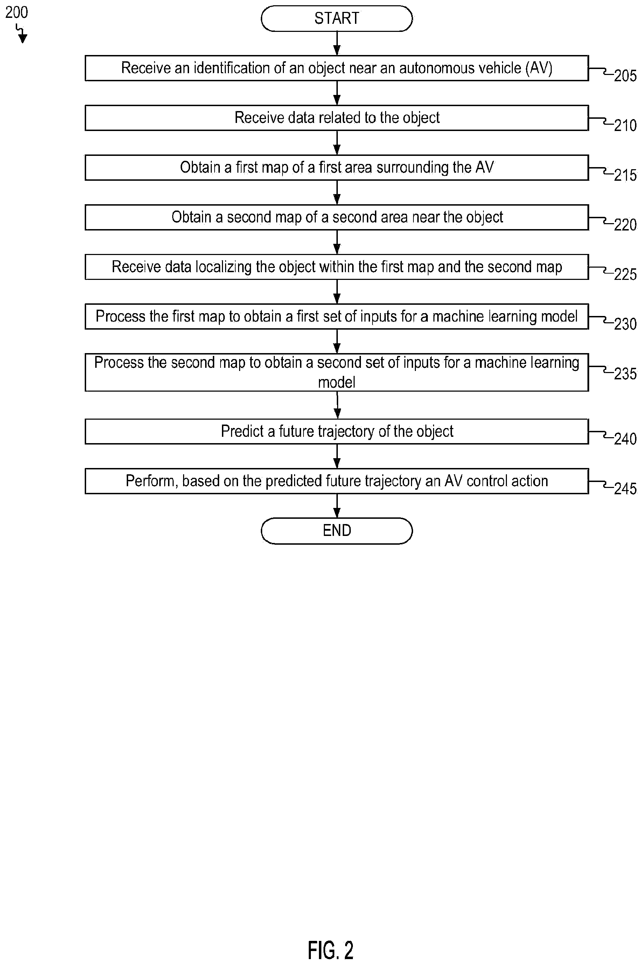

FIG. 2 illustrates an example method 200 in accordance with one or more embodiments described herein. Although the example method 200 depicts a particular sequence of operations, the sequence may be altered without departing from the scope of the present disclosure. For example, some of the operations depicted may be performed in parallel or in a different sequence that does not materially affect the function of the method 200. In other examples, different components of an example device or system that implements the method 200 may perform functions at substantially the same time or in a specific sequence.

According to some embodiments, the method includes receiving an identification of an object within a first area surrounding the autonomous vehicle at step 205. For example, the prediction stack 116 illustrated in FIG. 1 may receive an identification of an object within a first area surrounding the autonomous vehicle. In one or more embodiments, the identification of the object is received from a perception stack of an AV (e.g., perception stack 112 of FIG. 1). An object for which an identification is received may be any object near an AV. For example, the object may be an object that is moving, was moving, or possibly could begin moving, thereby altering the environment around the AV. As an example, the object may be a pedestrian, a bicycle, another AV, another vehicle of any type, an animal, etc. In one or more embodiments, receiving an identification of an object includes receiving any other information related to the object. As an example, the perception stack may also provide kinematic information that includes past positional information for the object, the object's speed(s) over a period of time, etc. As another example, the prediction stack of the AV may receive information related to the type of object identified (e.g., a car, a person, etc.).

According to some embodiments, the method includes receiving data identifying the object from a trained perception model at step 210. For example, the prediction stack 216 illustrated in FIG. 1 may receive data identifying the object from a trained perception model. In some embodiments, the data identifies a type of object. In some embodiments, the data identifying the object from a trained perception model comprises past positional information of the object.

According to some embodiments, the method includes obtaining a first map of the first area surrounding the AV in step 215. In one or more embodiments, the first map has a first resolution. For example, the prediction stack illustrated in FIG. 1 may obtain a first map of the first area. The first map of the area surrounding the AV may be obtained from any source. As an example, the first map may be a semantic map, having any number of layers, obtained from the HD geospatial database 126 of FIG. 1. As another example, the first map may be obtained from a remote source, such as the cartography platform 162 if the data center 150 of FIG. 1. The first map may cover any amount of area surrounding the AV (e.g., a 30 meters by 30 meters area centered on the AV).

According to some embodiments, the method includes obtaining a second map of a second area near the object at step 220. For example, the prediction stack 116 illustrated in FIG. 1 may obtain a second map of a second area near the object. In some embodiments, the second area is smaller than the first area. In some embodiments, the second resolution is higher than the first resolution. In one or more embodiments, the area covered by the second map is based on (e.g., centered on) the object for which a trajectory prediction is to be made (i.e., not on the AV). In one or more embodiments, the higher resolution of the smaller second map may allow for more detail of the immediate surroundings of the object than could be ascertained by using the lower resolution, larger area first map of the area surrounding the AV, such as, for example, road markings, relation to other nearby objects, etc.

In one or more embodiments, the size of the area of the second map is determined, at least in part, on information received related to the object. As an example, the method may include determining a distance in which the object is likely to travel within a time interval. Such a distance may be determined, for example, based on past positional information of the object at various times, information related to the calculated speed of the object, etc. Such distance information may be combined with a time window for which a trajectory prediction is required or desired. As an example, it may be desired or required to predict a trajectory of the object for the next three seconds. In such an example, the aforementioned distance that the object is likely to travel in the three-second time window may be used to determine the size of the area covered by the second map. In some embodiments, the distance in which the object is likely to travel within a time interval is further based at least in part on an average maximum speed associated with the object. In some embodiments, the map of a second area near the object covers the distance in which the object is likely to travel within the time interval.

According to some embodiments, the method includes receiving data localizing the object to locations on the first map and the second map at step 225. For example, the prediction stack 116 illustrated in FIG. 1 may receive data localizing the object to locations on the first map and the second map. In one or more embodiments, localizing the object in the first map and the second map includes obtaining the position and orientation of the object within the first area and the second area, respectively. Such localizing information may be received, for example, from the perception stack 112 of the AV.

According to some embodiments, the method includes processing the first map to obtain a first set of inputs into a trained trajectory prediction model at step 230. For example, the prediction stack illustrated in FIG. 1 may process the first map to obtain a first set of inputs into a trained trajectory prediction model. In one or more embodiments, processing the first map includes assessing the first map to derive information about the first area surrounding the AV, such as, for example, the context of the road system in the first area (i.e., the area surrounding the AV), information about the existence of stationary and moving objects in the first area, the existence of lane markings, the existence of traffic signs, the existence and state of variable traffic control devices (e.g., stoplights), etc. The information derived from the first map may come from any layer of the map. The information derived from the first map may include information obtained from a remote source based on information within the first map. All or any portion of the information derived by processing the first map may be used as an input to a trained trajectory prediction machine learning model. In one or more embodiments, processing the first map includes providing the first map as input to a first convolutional neural network. In one or more embodiments, the first convolutional neural network processes the input first map to convert the first map into an embedding, which may be a list of numbers representing aspects of the first map. Over time, the first convolutional neural network may learn what aspects of the first map are most relevant to generating more accurate trajectory predictions.

According to some embodiments, the method includes processing the second map to obtain a second set of inputs into the trained trajectory prediction model at step 235. For example, the prediction stack 116 illustrated in FIG. 1 may process the second map to obtain a second set of inputs into the trained trajectory prediction model. In some embodiments, processing the second map to obtain the second set of machine learning model inputs comprises converting variable size data of the object into fixed-length data (e.g., using PointNet) that is usable as input to the trained trajectory prediction machine learning model. In one or more embodiments, processing the second map includes analyzing the second map, including any or all layers therein, and any other information received relating to the object (e.g., past positional information) to obtain the second set of inputs for the trained trajectory prediction machine learning model. In one or more embodiments, the second set of inputs includes more detailed information about the area around the object than could be obtained from the lower resolution first map. As an example, the higher resolution second map may more clearly show the lane markings around the object and differentiate the object from other nearby objects, with such information becoming part of the second set of inputs. In one or more embodiments, processing the second map includes providing the second map as input to a second convolutional neural network. In one or more embodiments, the second convolutional neural network processes the input first map to convert the first map into an embedding, which may be a list of numbers representing aspects of the second map. Over time, the second convolutional neural network may learn what aspects of the second map are most relevant to generating more accurate trajectory predictions.

According to some embodiments, the method includes predicting a future trajectory of the object by the trained trajectory prediction model based on the first map at the first resolution, the second map with the higher resolution than the first resolution, and the identified object at step 240. For example, the prediction stack 116 illustrated in FIG. 1 may predict a future trajectory of the object by the trained trajectory prediction model based on the first map at the first resolution, the second map with the higher resolution than the first resolution, and the identified object. In some embodiments, the predicted future trajectory of the object is associated with an uncertainty value generated by the trajectory projection machine learning model. Any number of trajectories may be predicted for the object without departing from the scope of embodiments described herein, each with an associated uncertainty value. As an example, the machine learning model may be used to produce five separate trajectory predictions predicting possible trajectories of the object in the next three seconds. In one or more embodiments, the output predictions of the future trajectory of the object produced by the trained trajectory prediction machine learning model are based on the first set of inputs derived from the first map obtained in step 215 in combination with the second set of inputs derived from the second map obtained in step 220. In one or more embodiments, the combination of inputs includes an output by a first convolutional neural network that was used to process the first map, and an output by a second convolutional neural network that was used to process the second map, which are used to create a combined embedding to use as input for the trained trajectory prediction machine learning model. Thus, in one or more embodiments, the complete set of inputs to the trained trajectory prediction machine learning model is the combination of the first set of inputs and the second set of inputs (e.g., the embedding produced by the first and second convolutional neural networks), and the combined set of inputs are used to produce a more accurate trajectory prediction for the object than could be achieved using a single map. In one or more embodiments, the more accurate prediction is obtained without overly taxing the compute resources of the local computer of the AV by the prediction stack, as the first map has a lower resolution, and thus less information to process, while the higher resolution second map covers a much smaller area that is only as large as needed to predict the trajectory of the object within a desired window of time.

According to some embodiments, the method includes performing, based on the predicted future trajectory of the object, an autonomous vehicle control action at step 245. For example, the planning stack 118, in conjunction with the control stack 122 illustrated in FIG. 1 may perform, based on the predicted future trajectory of the object, an autonomous vehicle control action. In some embodiments, the performing of the autonomous vehicle control action is the result of receiving the predicted future trajectory of the object into a trained planning algorithm and outputting a committed path for the autonomous vehicle, which is used to effectuate the autonomous vehicle control action. Examples of such control actions include, but are not limited to, causing the AV to decelerate or stop, causing the AV to accelerate, causing the AV to alter its course, causing the AV to communicate with a data center or a client computing device, causing a safety system of the AV to operate (e.g., turning on a turn signal, hazard lights, etc.). In one or more embodiments, the AV control action is a combination of actions. As an example, the AV control action may be to both decelerate the AV and change the course of the AV to avoid the object, as the predicted trajectory of the object puts the object in a position such that the current course of the AV may lead to a collision with the object if no control action is performed.

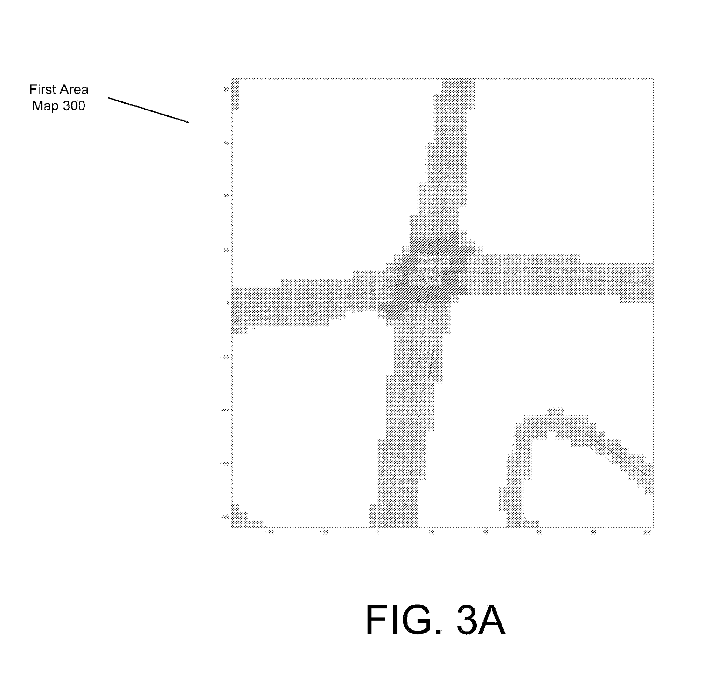

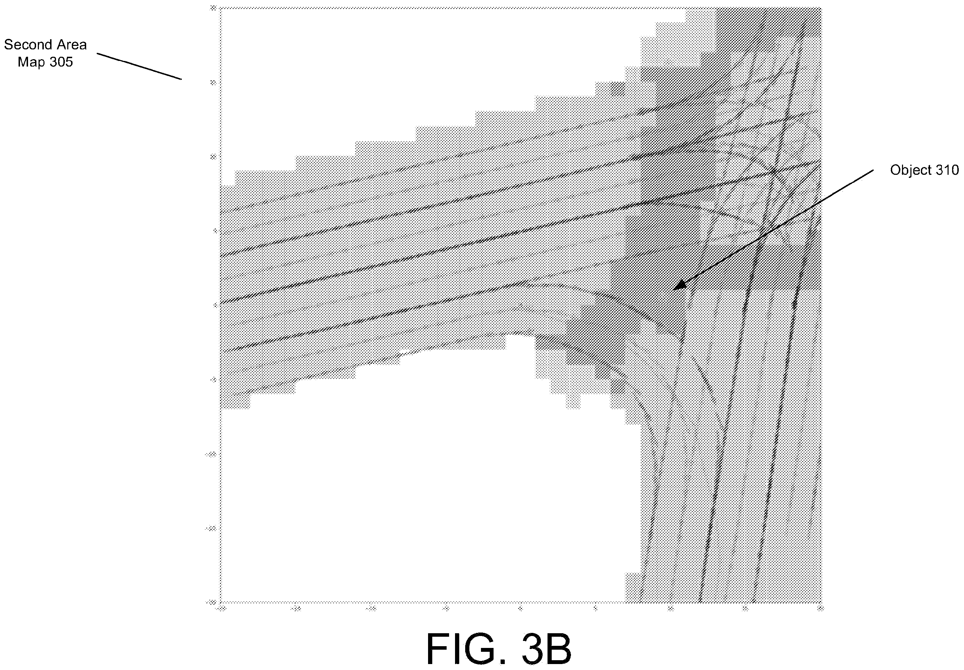

FIGS. 3A and 3B show examples of a first are map 300 of an area surrounding an AV and a second area map 305 of an area near an object in accordance with one or more embodiments described herein. As shown in FIG. 3A, the area covered by the map is relatively larger than the area covered by the map shown in FIG. 3B. Additionally, the resolution of the map shown in FIG. 3B is higher than the resolution of the map shown in FIG. 3A. As such, the map shown in FIG. 3B includes much greater detail on the various features of the area surrounding the object 310, such as higher resolution lane markings, higher resolution object features, and bitmap features, etc. In one or more embodiments, both of the maps shown in FIG. 3A and FIG. 3B are processed to obtain inputs for a trained trajectory prediction machine learning model used to predict the future trajectory of the object 310.

### Example Use Case 1

The above describes systems and methods for predicting the trajectory of an object near an AV. Such embodiments may be used for predicting any number of possible trajectories of any number of objects. However, for the sake of brevity and simplicity, consider the following simplified scenario to illustrate at least a portion of the concepts described herein.

Consider a scenario in which an AV is navigating through a densely populated area in a right lane of a three-lane one-way street. In such a scenario, a semantic map of the area surrounding the AV (i.e., a first map) may include a two-dimensional representation of a fifty-meter square area centered on the AV. The map may include an areas layer, a lanes and boundaries layer, an intersections layer, a traffic controls layer, and a live layer. The areas layer can include geospatial information indicating geographic areas that are drivable (e.g., roads, parking areas, shoulders, etc.) or not drivable (e.g., medians, sidewalks, buildings, etc.), drivable areas that constitute links or connections (e.g., drivable areas that form the same road) versus intersections (e.g., drivable areas where two or more roads intersect), and so on. The lanes and boundaries layer can include geospatial information of road lanes (e.g., lane centerline, lane boundaries, type of lane boundaries, etc.) and related attributes (e.g., the direction of travel, speed limit, lane type, etc.). The lanes and boundaries layer can also include 3D attributes related to lanes (e.g., slope, elevation, curvature, etc.). The intersections layer can include geospatial information of intersections (e.g., crosswalks, stop lines, turning lane centerlines and/or boundaries, etc.) and related attributes (e.g., permissive, protected/permissive, or protected only left-turn lanes; legal or illegal u-turn lanes; permissive or protected only right turn lanes; etc.). The traffic controls lane can include geospatial information of traffic signal lights, traffic signs, and other road objects and related attributes. The live layer may be a layer that overlays the other layers with information related to positional information of objects present within the area surrounding the AV, including past positional information for objects that are moving.

The first map of the area surrounding the AV includes a representation of object that represents a group of pedestrians on a sidewalk to the right of the road on which the AV is traveling. At the level of resolution of the map of the area surrounding the AV, however, individual pedestrians that are close to one another cannot be differentiated from one another, and so are represented as a single object. Therefore, when a prediction stack of the AV obtains the map of the area surrounding the AV, making a prediction of the future trajectory of an individual pedestrian may not be possible.

Therefore, in addition to obtaining the lower resolution first map of the area surrounding the AV, the prediction stack also obtains a second map of the area around the pedestrian group that is a smaller area and a much higher resolution. The higher resolution allows the map to differentiate the individual pedestrians of the pedestrian group. Based on being able to identify the individual pedestrians in the second map, the prediction stack also obtains past positional information for the pedestrians and their speed. One of the pedestrians is moving toward the street at two meters per second, while none of the other pedestrians are moving towards the street. Based on the speed of the pedestrian moving towards the street, the area of the second map is set at six meters square, centered on the pedestrian.

Next, the two maps are processed to obtain two sets of inputs for a trajectory prediction machine learning model. The combined set of inputs are provided to the trajectory prediction model in order to predict a trajectory of the pedestrian moving towards the street. The predicted trajectory of the pedestrian, who is five meters from the street, places the pedestrian a half meter into the street in the lane in which the AV is traveling at the time the AV will intersect that point in the street based on its current course and speed.

Next, the predicted trajectory is provided by the prediction stack of the AV to the planning stack of the AV. In order to avoid the pedestrian, the planning stack determines an alternate course for the AV that includes causing the AV to move from its present lane, one lane to the left. The control system uses this alternate course to perform an AV control action that includes turning on a left turning signal to indicate that the AV intends to change lanes and engaging the steering system to actuate the actual lane change.

Therefore, based on using the lower resolution of the larger area first map and the higher resolution of the second map of the area around the pedestrian, a better-predicted trajectory of the pedestrian is achieved, thereby avoiding a potential collision with the pedestrian.

### End of Example Use Case 1

### Example Use Case 2

The above describes systems and methods for predicting the trajectory of an object near an AV. Such embodiments may be used for predicting any number of possible trajectories of any number of objects. However, for the sake of brevity and simplicity, consider the following simplified scenario to illustrate at least a portion of the concepts described herein.

Consider a scenario in which an AV is navigating through a city. In such a scenario, the AV travels on a two-lane, one-way street and approaches an intersection. The intersection is with another street that is also a one-way, two-lane street. A car is traveling down the street intersecting the street on which the AV is traveling and is near the intersection.

In such a scenario, the prediction stack of the AV receives an identification of the car from the perception stack of the AV. Next, the prediction stack of the AV obtains a first map of the area surrounding the AV that includes the intersection. The resolution of the first map is not high enough to allow for the markings on the roads near the intersection to be ascertained. The prediction stack also obtains a second map of the area around the car traveling on the other street. The area of the second map is based on the average speed of the car and its past positional information, which causes the second area to include the intersection. The second map is thus smaller in area than the first map and of greater resolution. The greater resolution allows for the markings on the road to be ascertained. The markings on the road thus become part of a second set of inputs for a trajectory prediction model based on processing of the second map, which are combined with a first set of inputs based on processing the first map of the area surrounding the AV to obtain a combined set of inputs for the trajectory prediction model.

The markings on the street on which the other car is traveling, which were ascertained using the higher resolution second map, indicate that one of the lanes of the street is a turn-only lane, and the other lane only permits traveling straight through the intersection.

Based in part on these markings, the trajectory prediction for the car, which is in the turn only lane, predicts a path in which the car turns onto the street in which the AV is traveling slightly before the AV reaches the intersection, which the AV would normally not have to stop for, as there are no signals or signs stopping the flow of traffic on that street at the intersection. Therefore, with no change, the AV would be likely to collide with the car.

The predicted trajectory is provided by the prediction stack of the AV to the planning stack of the AV, which uses the predicted trajectory of the car to cause the braking system of the AV to decelerate the AV enough to avoid the collision by giving the other car enough time to complete its turn and accelerate appropriately.

Thus, in this scenario, the machine learning model inputs based on a lower resolution map of the area surrounding the AV, combined with additional inputs from the higher resolution map of the area surrounding the other car, allow the prediction stack of the AV to better predict the future trajectory of the car, thereby allowing the AV to avoid a collision with the car.

### End of Example Use Case 2

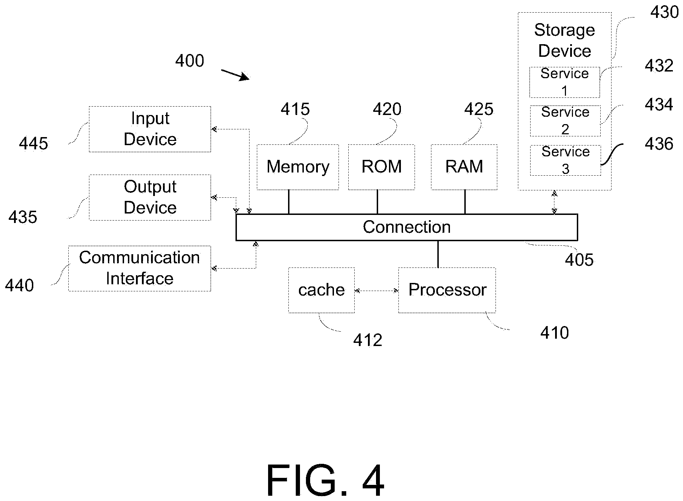

FIG. 4 shows an example of computing system 400, which can be, for example, any computing device making up local computing device 110 of FIG. 1, or any component thereof in which the components of the system are in communication with each other using connection 405. Connection 405 can be a physical connection via a bus, or a direct connection into processor 410, such as in a chipset architecture. Connection 405 can also be a virtual connection, networked connection, or logical connection.

In some embodiments, computing system 400 is a distributed system in which the functions described in this disclosure can be distributed within a datacenter, multiple data centers, a peer network, etc. In some embodiments, one or more of the described system components represents many such components each performing some or all of the function for which the component is described. In some embodiments, the components can be physical or virtual devices.

Example system 400 includes at least one processing unit (CPU or processor) 410 and connection 405 that couples various system components including system memory 415, such as read-only memory (ROM) 420 and random access memory (RAM) 425 to processor 410. Computing system 400 can include a cache of high-speed memory 412 connected directly with, in close proximity to, or integrated as part of processor 410.

Processor 410 can include any general purpose processor and a hardware service or software service, such as services 432, 434, and 436 stored in storage device 430, configured to control processor 410 as well as a special-purpose processor where software instructions are incorporated into the actual processor design. Processor 410 may essentially be a completely self-contained computing system, containing multiple cores or processors, a bus, memory controller, cache, etc. A multi-core processor may be symmetric or asymmetric.

To enable user interaction, computing system 400 includes an input device 345, which can represent any number of input mechanisms, such as a microphone for speech, a touch-sensitive screen for gesture or graphical input, keyboard, mouse, motion input, speech, etc. Computing system 400 can also include output device 435, which can be one or more of a number of output mechanisms known to those of skill in the art. In some instances, multimodal systems can enable a user to provide multiple types of input/output to communicate with computing system 400. Computing system 400 can include communications interface 340, which can generally govern and manage the user input and system output. There is no restriction on operating on any particular hardware arrangement, and therefore the basic features here may easily be substituted for improved hardware or firmware arrangements as they are developed.

Storage device 430 can be a non-volatile memory device and can be a hard disk or other types of computer readable media which can store data that are accessible by a computer, such as magnetic cassettes, flash memory cards, solid state memory devices, digital versatile disks, cartridges, random access memories (RAMs), read-only memory (ROM), and/or some combination of these devices.

The storage device 430 can include software services, servers, services, etc., that when the code that defines such software is executed by the processor 410, it causes the system to perform a function. In some embodiments, a hardware service that performs a particular function can include the software component stored in a computer-readable medium in connection with the necessary hardware components, such as processor 410, connection 405, output device 435, etc., to carry out the function.

For clarity of explanation, in some instances, the present technology may be presented as including individual functional blocks including functional blocks comprising devices, device components, steps or routines in a method embodied in software, or combinations of hardware and software.

Any of the steps, operations, functions, or processes described herein may be performed or implemented by a combination of hardware and software services or services, alone or in combination with other devices. In some embodiments, a service can be software that resides in memory of a client device and/or one or more servers of a content management system and perform one or more functions when a processor executes the software associated with the service. In some embodiments, a service is a program or a collection of programs that carry out a specific function. In some embodiments, a service can be considered a server. The memory can be a non-transitory computer-readable medium.

In some embodiments, the computer-readable storage devices, mediums, and memories can include a cable or wireless signal containing a bit stream and the like. However, when mentioned, non-transitory computer-readable storage media expressly exclude media such as energy, carrier signals, electromagnetic waves, and signals per se.

Methods according to the above-described examples can be implemented using computer-executable instructions that are stored or otherwise available from computer-readable media. Such instructions can comprise, for example, instructions and data which cause or otherwise configure a general purpose computer, special purpose computer, or special purpose processing device to perform a certain function or group of functions. Portions of computer resources used can be accessible over a network. The executable computer instructions may be, for example, binaries, intermediate format instructions such as assembly language, firmware, or source code. Examples of computer-readable media that may be used to store instructions, information used, and/or information created during methods according to described examples include magnetic or optical disks, solid-state memory devices, flash memory, USB devices provided with non-volatile memory, networked storage devices, and so on.

Devices implementing methods according to these disclosures can comprise hardware, firmware and/or software, and can take any of a variety of form factors. Typical examples of such form factors include servers, laptops, smartphones, small form factor personal computers, personal digital assistants, and so on. The functionality described herein also can be embodied in peripherals or add-in cards. Such functionality can also be implemented on a circuit board among different chips or different processes executing in a single device, by way of further example.

The instructions, media for conveying such instructions, computing resources for executing them, and other structures for supporting such computing resources are means for providing the functions described in these disclosures.

Although a variety of examples and other information was used to explain aspects within the scope of the appended claims, no limitation of the claims should be implied based on particular features or arrangements in such examples, as one of ordinary skill would be able to use these examples to derive a wide variety of implementations. Further and although some subject matter may have been described in language specific to examples of structural features and/or method steps, it is to be understood that the subject matter defined in the appended claims is not necessarily limited to these described features or acts. For example, such functionality can be distributed differently or performed in components other than those identified herein. Rather, the described features and steps are disclosed as examples of components of systems and methods within the scope of the appended claims.

## Claims

1. A method for predicting trajectories of objects around an autonomous vehicle, the method comprising:
receiving an identification of an object within a first area surrounding the autonomous vehicle;
obtaining a first map of the first area, the first map having a first resolution;
obtaining a second map of a second area near the object, the second map having a second resolution, wherein:
the second area is smaller than the first area, and
the second resolution is higher than the first resolution;
processing the first map to obtain a first set of inputs into a trained trajectory prediction model;
processing the second map to obtain a second set of inputs into the trained trajectory prediction model; and
predicting a future trajectory of the object by the trained trajectory prediction model based on the first map at the first resolution, the second map with the higher resolution than the first resolution, and the identified object.

2. The method of claim 1, further comprising:
performing, based on the predicted future trajectory of the object, an autonomous vehicle control action.

3. The method of claim 1, further comprising:
receiving data identifying the object from a trained perception model, wherein the data identifies a type of object and comprises past positional information of the object; and
receiving data localizing the object to locations on the first map and the second map.

4. The method of claim 1, wherein processing the second map to obtain the second set of inputs comprises converting variable size data of the object into fixed length data.

5. The method of claim 1, wherein after the receiving the identification of the object within a first area surrounding the autonomous vehicle, the method further comprises:
determining a distance in which the object is likely to travel within a time interval, wherein the map of a second area near the object covers the distance in which the object is likely to travel within the time interval.

6. The method of claim 5, wherein distance in which the object is likely to travel within a time interval is further based at least in part on an average maximum speed associated with the object.

7. The method of claim 1, wherein the predicted future trajectory of the object is associated with an uncertainty value generated by the trained trajectory projection model.

8. Computer program, **characterized in that** it comprises code means configured to, when executed on a computer, carry out the steps of the method according to any one claim 1 to 7.

9. A non-transitory computer-readable storage medium, **characterized in that** the computer program of claim 8 is stored on it.

10. A system comprising:
a storage configured to store instructions; and
a processor configured to execute the instructions and cause the processor to:
receive an identification of an object within a first area surrounding an autonomous vehicle,
obtain a first map of the first area, the first map having a first resolution,
obtain a second map of a second area near the object, the second map having a second resolution,
the second area is smaller than the first area,
the second resolution is higher than the first resolution,
process the first map to obtain a first set of inputs into a trained trajectory prediction model,
process the second map to obtain a second set of inputs into the trained trajectory prediction model, and
predict a future trajectory of the object by the trained trajectory prediction model based on the first map at the first resolution, the second map with the higher resolution than the first resolution, and the identified object.

11. The system of claim 15, wherein the processor is configured to execute the instructions and cause the processor to:
perform, based on the predicted future trajectory of the object, an autonomous vehicle control action.

12. The system of claim 15, wherein the processor is configured to execute the instructions and cause the processor to:
receive data identifying the object from a trained perception model, wherein the data identifies a type of object and comprises past positional information of the object; and
receive data localizing the object to locations on the first map and the second map.

13. The system of claim 15, wherein processing the second map to obtain the second set of inputs comprises converting variable size data of the object into fixed length data.

14. The system of claim 15, wherein the processor is configured to execute the instructions and cause the processor to:
determine a distance in which the object is likely to travel within a time interval, wherein the map of a second area near the object covers the distance in which the object is likely to travel within the time interval.

15. The system of claim 19, wherein distance in which the object is likely to travel within a time interval is further based at least in part on an average maximum speed associated with the object.
